(19) Europäisches Patentamt
European Patent Office
Office européen des brevets

(11) EP 2 644 857 B1

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(51) Int Cl.:
***F01N 3/023*** *(2006.01)* ***F01N 3/20*** *(2006.01)*

(21) Anmeldenummer: **13000848.5**

(22) Anmeldetag: **20.02.2013**

(54) **Verfahren zur Anwendung in Verbindung mit einer Abgasnachbehandlungsanlage**

Method for use in connection with an exhaust gas after-treatment system

Procédé destiné à l'utilisation en liaison avec un dispositif de post-traitement de gaz d'échappement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2012 DE 102012006448**

(43) Veröffentlichungstag der Anmeldung:
**02.10.2013 Patentblatt 2013/40**

(73) Patentinhaber: **MAN Truck & Bus AG**
**80995 München (DE)**

(72) Erfinder: **Döring, Andreas**
**82008 Unterhaching (DE)**

(74) Vertreter: **v. Bezold & Partner Patentanwälte - PartG mbB**
**Akademiestraße 7**
**80799 München (DE)**

(56) Entgegenhaltungen:
**EP-A1- 2 166 203**
**WO-A1-2010/140262**
**DE-A1-102006 021 089**
**US-A1- 2010 057 328**
**US-A1- 2011 047 970**
**US-A1- 2012 017 567**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 644 857 B1

## Beschreibung

Gegenstand der Erfindung ist ein Verfahren zum Betrieb eines Abgasnachbehandlungssystems bei mit Luftüberschuss betriebenen Brennkraftmaschinen, wie Dieselmotoren und Benzinmotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die $NO_x$ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig, wobei die Stickoxide mit dem am Katalysator angelagerten $NH_3$ gemäß folgender Gleichung reagieren:

$$4NO+4NH_3+O_2 \Rightarrow 4N_2 +6H_2O \qquad (1)\text{-}$$

Das Verhältnis zwischen $NH_3$ und $NO_X$ wird als Feedverhältnis $\alpha$ bezeichnet.

$$\alpha=NH_3/NO_X$$

Bei einem idealen Katalysator bedeutet dies, dass bei einem Feedverhältnis von a=l alle Stickoxide reduziert werden, also ein 100%-iger $NO_X$ -Umsatz erreicht wird, da für den $NO_x$-Umsatz $X_{NOx}$ gilt:

$$X_{NOx} = \frac{c_{NOx,0} - c_{NOx}}{c_{NOx,0}}$$

mit:

$C_{NOx,0}$: $NO_x$-Rohemissionen [ppm]
$c_{NOx}$: : $NO_x$-Emissionen nach Katalysator [ppm]

Wird den SCR-Katalysatoren ein platinhaltiger NO-Oxidationskatalysator zur Bildung von $NO_2$ vorgeschaltet

$$2NO+O_2 \Leftrightarrow 2NO_2 \qquad (2)$$

so kann die SCR-Reaktion erheblich beschleunigt und die Tieftemperaturaktivität merklich angehoben werden.

$$NO+2NH_3+NO_2 \Rightarrow 2N_2+3H_2O \qquad (3)$$

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt.

Zur Minimierung der Feinstoffpartikel werden sowohl im Kraftwerksbereich als auch bei Fahrzeugen Partikelfilter eingesetzt. Bei Partikelfiltern liegt der Durchmesser der Filterkanäle im Bereich der Durchmesser der Partikel. Infolge dieses Umstandes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die vorgenannten Anordnungen bzw. das vorgenannte Verfahren zeichnet sich dadurch aus, dass der stromauf zum Partikelfilter angeordnete Oxidationskatalysator - zumeist ein Katalysator mit Platin als Aktivmaterial - das Stickstoffmonoxid im Abgas

mit Hilfe des ebenfalls enthaltenen Restsauerstoffes zu Stickstoffdioxid oxidiert, das sich wiederum im Partikelfilter mit den Kohlenstoffpartikeln zu CO, $CO_2$, $N_2$ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch.

$$2NO_2 + C \Rightarrow 2\ NO + CO_2 \qquad (4)$$

$$2\ NO_2 + C \Rightarrow 2\ NO + CO \qquad (5)$$

$$2\ C + 2\ NO_2 \Rightarrow N_2 + 2CO_2 \qquad (6)$$

Gelingt keine vollständige Oxidation des im Partikelfilter eingelagerten Kohlenstoffs mit Hilfe von $NO_2$, so steigt der Kohlenstoffanteil und damit der Abgasgegendruck stetig an. Wird eine kritische Masse erreicht, kann es bei hohen Abgastemperaturen zur unkontrollierten Zündung des Kohlenstoffs kommen, der dann schlagartig mit Sauerstoff verbrennt.

$$C + O_2 \Rightarrow CO_2 \qquad (7)$$

Dies führt zu einem Temperaturanstieg auf bis zu 1000°C.

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im Wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert und diese anschließend katalytisch oxidiert werden. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe, wie Kohlenmonoxid, die nur schwer wieder aus dem Abgas entfernt werden können.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feinstoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ($(NH_2)_2CO$) in Ammoniak ($NH_3$) ist bekannt, dass dies unter optimalen Bedingungen (Temperaturen über 350° C) in zwei Stufen geschieht, nach

$$(NH_2)_2CO \Rightarrow NH_3 + HNCO \qquad (8)$$

erfolgt zunächst die Thermolyse, d. h. die thermische Zersetzung von Harnstoff. Anschließend erfolgt nach

$$HNCO + H_2O \Rightarrow NH_3 + CO_2 \qquad (9)$$

die Hydrolyse, also die katalytische Zersetzung von Isocyansäure (HNCO) in Ammoniak ($NH_3$) und Kohlendioxid ($CO_2$).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (7) gebildeten Isocyansäure gemäß

$$3HNCO \underset{>350°C}{\overset{<350°C}{\rightleftarrows}} (HNCO)_3 \qquad (10)$$

entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems. Ein solcher zusätzlicher Hydrolysekatalysator verteuert jedoch die Anordnung zur Abgasnachbehandlung zusätzlich.

Eine Abgasnachbehandlungsanordnung bestehend aus einem Oxidationskatalysator und einem nachgeordneten Partikelfilter der mit einem SCR-Katalysator zu einer baulichen Einheit zusammengefasst derart, dass der Partikelfilter mit einer SCR-aktiven Masse beschichtet ist oder aus einer solchen Masse besteht oder eingelagerte SCR-aktive Zentren besitzt ist aus der DE 103 23 607 bekannt. Zur Einbringung des Reduktionsmittel ist es bei dieser Anordnung vorgesehen, dass stromab zum Oxidationskatalysator und stromauf zum Partikelfilter eine Zuführung für das Reduktionsmittel, bevorzugt eine wässrige Harnstofflösung vorgesehen. Eine derartige Anordnung hat zwar den Vorteil, einer geringen Baugröße und einer geringen Wärmekapazität, hat aber, wie Versuche gezeigt haben, den Nachteil, dass durch die

Ammoniakspeichereigenschaft SCR-aktiver Katalysatormaterialien ein starker Ammoniaküberschuss in den Bereichen der Anordnung auftreten kann, die den angelagerten Partikeln unmittelbar benachbart sind, so dass die Reaktion nach Gleichung (3) unmittelbar auf engstem Raum mit der Reaktion nach den Gleichung (4) bis (6) konkurriert. Es wird also weniger von den angelagerten Kohlenstoffpartikeln umgesetzt, als dies erforderlich wäre, um ein Ansteigen des Abgasgegendrucks und die Gefahr eines unkontrollierten Abbrandes der angelagerten Kohlenstoffpartikel nach Gleichung (7) beim Erreichen einer kritischen Partikelmasse zu vermeiden. Das Erste hätte eine Leistungsminderung bei im Abgasstrang einer Brennkraftmaschine verbauten Abgasnachbehandlungsanordnung zur Folge und das Zweite eine möglich Zerstörung der gesamten Anordnung.

Eine weitere Anordnung zur Abgasnachbehandlung ist der EP 2014348 zu entnehmen. Dort wird ein Verfahren zur Reduktion der Stickoxide angegeben das folgende Schritte umfasst:

a) Mittel um $NO_2$ in dem $NO_x$ und Ruß enthaltende Abgas bereitzustellen, wobei die Mittel innermotorische Maßnahmen sind und/ oder mindestens einen Teil des $NO_x$ und Ruß enthaltenden Abgases in Kontakt mit einem Oxidationskatalysator gebracht wird, der das $NO_2/NO_x$ Verhältnis erhöht;

b) ein Einspritz-Modul das dazu bestimmt ist, zumindest in einem Teil des $NO_x$ und Ruß enthaltenden Abgases eine vorbestimmte Menge an Ammoniak einzuspritzen, entweder als reine Ammoniak oder als Vorläuferverbindung für Ammoniak, wie Harnstoff, eine flüssige Lösung Harnstoff, Ammoniumcarbamat, Isocyansäure, Cyanursäure, Methanamid, etc. oder Kombinationen von ihnen, und wobei dieses Einspritz-Modul in Strömungsrichtung des NOx- und Ruß enthaltenden Abgases stromabwärts oder parallel zu dem Oxidationskatalysator in angeordnet ist, und

c) eine Einrichtung zum Filtern/ Abscheiden von Ruß, d.h. von Kohlenstoff-Teilchen, wobei das im Abgas enthaltene $NO_x$ und der Ruß dazu bestimmt sind, um den in der Einrichtung zum Filtern/ Abscheiden Ruß angelagerten Ruß zu kontaktieren, d.h. die Kohlenstoff-Teilchen, mit dem Ammoniak angereicherte $NO_x$-und Ruß enthaltende Abgas, wodurch eine selektiven katalytischen Reduktion von mindestens einem Teil der $NO_x$ -Moleküle mit dem Ammoniak zu Stickstoff und Wasser initiieren wird.

Das Dokument EP 2 166 203 A1 offenbart eine Vorrichtung zur Reinigung eines Abgasstroms einer Brennkraftmaschine eines Kraftfahrzeuges, insbesondere eines Nutzfahrzeuges, mit einem eine Einströmseite und eine Abströmseite aufweisenden Partikelabscheider, der in vorgegebenen Abscheiderbereichen eine katalytisch aktive Oberfläche zur Reduzierung von Stickoxiden aufweist, wobei der Partikelabscheider einen Abgaspartikel, insbesondere Rußpartikel, definierter Größenordnung ein- und/oder anlagernden einströmseitigen Abscheiderbereich aufweist, der

einen abströmseitigen Abscheiderbereich wenigstens bereichsweise ringförmig umgibt und/oder in seinem Innenhohlraum aufnimmt, wobei die katalytisch aktive Oberfläche zur Reduzierung von Stickoxiden im oder am abströmseitigen Abscheiderbereich vorgesehen ist.

Das Dokument US 2012/0017567 A1 offenbart eine Transient-Kompensations-Steuerung eines SCR-Abgasnachbehandlungssystems für einen Verbrennungsmotor, der über einen Abgastrakt mit einem SCR-Katalysator verbunden ist. Vor dem SCR-Katalysator ist ein Dosierer am Abgastrakt angeordnet, der ein Reduktionsmittel zumisst. Ein nicht-stationärer Zustand im Betrieb eines SCR-Katalysators wird erfasst und eine Zielmenge des Reduktionsmittels daraufhin angepasst.

Das Dokument US 2010/0057328 A1 beschreibt ein Steuersystem, welches ein $NH_3$-Speicherniveau-Bestimmungsmodul und ein Kraftstoffsteuermodul umfasst. Das $NH_3$-Speicherniveau im Abgassystem wird bestimmt und ein Luft/Kraftstoff-Verhältnis in einem Motor auf Basis des $NH_3$-Speicherniveaus gesteuert.

Das Dokument DE 10 2006 021 089 A1 beschreibt eine Technik, um den Überschuss von Stickoxiden oder von Ammoniak im Abgas einer Brennkraftmaschine mit nur einem Sensor zu erkennen. Ein Feed-Verhältnis von Ammoniak und Stickoxiden wird moduliert. Korreliert ein Messsignal des Sensors mit der Modulation des Feed-Verhältnisses gleichsinnig, so wird das Messsignal dem Überschuss von Ammoniak zugeordnet. Repräsentiert dagegen das Messsignal die Modulation des Feed-Verhältnisses gegensinnig, wird das Messsignal dem Überschuss von Stickoxiden zugeordnet.

Das Dokument WO 2010/140262 A1 beschreibt eine Vorrichtung zur Abgasreinigung für einen Verbrennungsmotor. Die Vorrichtung umfasst einen ersten $NO_x$-selektiven Reduktionskatalysator, der in einem Abgastrakt vor einem zweiten $NO_x$-selektiven Reduktionskatalysator angeordnet ist. Eine Menge eines dem ersten $NO_x$-selektiven Reduktionskatalysator zugeführten Reduktionsmittels wird auf Grundlage einer Schätzung für das am zweiten $NO_x$-selektiven Reduktionskatalysator angelagerte Reduktionsmittel gesteuert.

Das Dokument US 2011/0047970 A1 beschreibt eine Abgasnachbehandlung mit einem SCR-Katalysator vor einem $NO_x$-Adsorbtionskatalysator. Der $NO_x$-Adsorbtionskatalysator wird regeneriert, indem eine Sauerstoffkonzentration im Abgasstrom vorrübergehend reduziert wird.

Ausgehend vom vorstehend beschriebenen Stand der Technik ist es Aufgabe der Erfindung, unter Vermeidung der Nachteile bekannter Anordnungen, ein Abgasnachbehandlungssystem zur Stickoxid- und Partikelreduzierung bei mit Luftüberschuss betriebenen Brennkraftmaschinen anzugeben, das sowohl die Partikelemission als auch die Stickoxidemission reduziert, und durch die Zusammenfassung von Komponenten und Funktionen in der Baugröße minimiert ist. Insbesondere gehört es zur Aufgabe, durch eine geeignete Prozessführung die Regeneration des Partikelfilters sicherzustellen und Ablagerungen aus dem Reduktionsmittel am Partikelfilter zuverlässig zu verhindern.

Gelöst wird die Aufgabe durch ein Abgasnachbehandlungssystem und ein Verfahren zu dessen Betrieb gemäß dem Kennzeichen des Anspruches 1, vorteilhafte Weiterbildungen des Abgasnachbehandlungssystems sind in den abhängigen Ansprüchen gekennzeichnet.

Bei der Lösung der Aufgabe wurde davon ausgegangen, dass zur Erreichung der geforderten Abgasgrenzwerte die Stickoxidreduzierung durch eine SCR-Reaktion mit Hilfe von Ammoniak erfolgt und die Partikelreduktion mittels eines Partikelfilters bewerkstelligt wird. Das erfindungsgemäße Abgasnachbehandlungssystem sieht im Abgasstrom der Brennkraftmaschine einen Partikelfilter vor, bei dem es sich um einen Oberflächenpartikelfilter oder einen Tiefenfilter handelt. Stromauf der Partikelfilters ist ein Katalysator zur Oxidation von NO zu $NO_2$ angebracht, um eine Regeneration des Partikelfilters mit Hilfe von $NO_2$ sicherzustellen. Zur Durchführung der selektiven katalytischen Reduktion der Stickoxide ist der Partikelfilter mit Ruß und/ oder einem SCR-aktiven Katalysatormaterial beladen. Die für die Erzeugung des Ammoniaks notwendige Zuführung eines ammoniakabspaltenden Reduktionsmittels oder von Ammoniak erfolgt stromauf zum Partikelfilter. Die vorstehend aufgezeigten Nachteile einer derartigen Anordnung werden durch die nachfolgend beschriebene Prozessführung gelöst: Die zugeführte Reduktionsmittelmenge und/oder die $NO_x$-Rohemission wird periodisch derart angehoben bzw. abgesenkt, dass in den Perioden mit niedrigem Feedverhältnis die $NO_x$- Menge die zugeführte Reduktionsmittelmenge übersteigt, was wiederum zur Folge hat, dass eine Reaktion des $NO_x$ mit dem bereits am Rußfilter und/ oder am SCR-aktiven Katalysatormaterial angelagerten Ammoniak stattfindet, während nicht mehr ausreichend $NH_3$ nachgeliefert wird, um die Ammoniakbeladung des Rußfilter und/ oder SCR-aktiven Katalysatormaterial konstant zu halten, so dass dessen Ammoniakbeladung zurückgeht. Insbesondere sinkt die Ammoniakbeladung am Filtereintritt und auf der, dem Rohabgas zugewandten Seite der Filterwand ab. Da die SCR-Reaktion gemäß den Gleichungen 1 und 3 allerdings über Zwischenstufen von, am Rußfilter und/ oder SCR-aktiven Katalysatormaterial angelagertem $NH_3$ stattfindet, hat dies zur Folge, dass sich der Schwerpunkt der $NO_x$- Umsetzung vom Filtereintritt und der Rohgasseite der Filterwand in Richtung Filteraustritt und Reingasseite der Filterwand verschiebt. Hierdurch erhöht sich die $NO_2$-Menge auf der Rohabgasseite des Partikelfilters auf Grund des dort, bedingt durch den lokalen $NH_3$-Mangel, vorherrschenden geringeren Umsatzes. Durch dieses erhöhte $NO_2$- Angebot wird die Oxidation des auf der Rohabgasseite des Partikelfilters abgeschiedenen Rußes erheblich verbessert.
Um dennoch einen hohen $NO_x$-Umsatz zu gewährleisten, wird nach Phasen mit niedrigem Feedverhältnis und bevor der gesamte im Rußfilter und/ oder SCR-aktiven Katalysatormaterial gespeicherte Ammoniak aufgebraucht ist, die

zugeführte Reduktionsmittelmenge derart angehoben und/oder die $NO_x$-Rohemission derart abgesenkt, dass die zugeführte Reduktionsmittelmenge die $NO_x$- Menge übersteigt, also ein hohes Feedverhältnis vorliegt. Durch diese Maßnahme wird der Russfilter und/ oder das SCR-aktiven Katalysatormaterial wieder mit $NH_3$ beladen, wodurch ein Absinken der $NO_x$- Umsätze vermieden werden kann.

Der Vorteil des erfindungsgemäßen Verfahrens besteht somit darin, dass auf der rußpartikelhaltigen Rohabgasseite periodisch hohe $NO_2$- Mengen vorhanden sind, die eine sichere Oxidation des kohlenstoffhaltigen Rußes ermöglichen, während anschließend große Mengen $NH_3$ im Russfilter und/ oder SCR-aktiven Katalysatormaterial eingespeichert werden, wodurch sich hohe $NO_x$-Umsätze erzielen lassen.

Um das "Entladen" des Katalysators von Ammoniak zu beschleunigen, ist es möglich, in diesen Phasen die Reduktionsmittelzufuhr komplett zu unterbinden oder zumindest zu verringern.

Die $NO_x$- Rohemissionen können, wie bereits beschrieben, durch das Verändern von Betriebsparametern der Brennkraftmaschine variiert werden. Als Betriebsparameter, die unmittelbaren Einfluss auf die $NO_x$-Emissionen haben, kommen unter anderem der Kraftstoff-Einspritzbeginn, das Luft- zu Kraftstoff-Verhältnis (Lambda), der Kraftstoff-Einspritzdruck, die Anzahl und zeitliche Abfolge der Kraftstoff-Einspritzungen pro Arbeitstakt, die Ansauglufttemperatur und die rückgeführte Abgasmenge (AGR- Rate) bei vorhandener Abgasrückführung in Frage. Der Vorteil der Absenkung des Feedverhältnisses über die Anhebung der $NO_x$-Rohemission besteht darin, dass das $NO_2$-Angebot auf der Rohgasseite nicht nur durch die Verarmung an $NH_3$, also die verschlechterte SCR-Reaktion, ansteigt, sondern bereits die dem Partikelfilter zugeführte $NO_2$-Menge auf Grund der erhöhten $NO_x$-Rohemission angehoben wird, wodurch die Rußoxidation zusätzlich beschleunigt wird.

Da das Ammoniakein- und -ausspeicherverhalten stark von den Betriebsbedingungen des Abgasnachbehandlungssystems, wie Temperatur, Ammoniakbeladungsgrad, $NO_x$- Umsatz, $NO_x$- Rohemission, $NO_2$- Emission stromauf des Partikelfilters, $NO_x$- Emission nach System, $NH_3$- Emission nach System und zugeführte Reduktionsmittelmenge, abhängt, ist es von Vorteil, die Periodenlänge und/oder das Maß der Überhöhung und/oder das Maß der Absenkung und/oder die Dauer der Überhöhung und/oder die Dauer der Absenkung der $NO_x$-Rohemissionen und/oder der zugeführten Reduktionsmittelmenge von diesen Größen abhängig zu machen.

Neben dem Ammoniakein- und ausspeicherverhalten ist für die fehlerfreie Funktion des Systems eine sichere Partikelfilteregeneration unverzichtbar. Aus diesem Grund ist es sinnvoll, die Periodenlänge und/oder das Maß der Überhöhung und/oder das Maß der Absenkung und/oder die Dauer der Überhöhung und/oder die Dauer der Absenkung der $NO_x$- Rohemissionen auch von der Rußbeladung des Partikelfilters abhängig zu machen.

Die oben beschriebnen Größen können zum einen direkt über Sensoren, wie Druck-, Temperatur-, $NO_x$-, $NH_3$- und $NO_2$-Sensoren, oder über Modelle, in Form von mathematischen Funktionen, Kennfeldern und/oder neuronalen Netzen, bestimmt werden.

Um das Bauvolumen des Filters gering zu halten, wird der Katalysator vorwiegend in den gasdurchlässigen Bereichen des Filters angebracht, so dass Partikelabscheidung und $NO_x$-Reduktion auf engstem Raum ablaufen können.

Als Material für den Partikelfilter eignen sich im Hinblick auf die Beladung mit SCR-aktivem Katalysatormaterial in vorteilhafter Weise Cordierit oder Siliziumcarbid oder Sintermetall oder keramische Fasern oder Silikatfasern oder Metallgestricke.

Günstig und damit vorteilhaft ist es, wenn die Beladung mit SCR-aktiven Katalysatormaterial auf der Abströmseite des Partikelfilters in Strömungsrichtung des Abgases zunimmt. Erreicht werden kann die entsprechende Verteilung des SCR-aktiven Materials dadurch, dass der Partikelfilter in Schichten aufgebaut ist, wobei die abströmseitigen Schichten eine in Strömungsrichtung des Abgases ansteigende Beladung mit dem SCR-aktiven Material aufweisen. Es ist natürlich auch möglich, die Beladung mit dem SCR-aktiven Material durch Beschichten oder Imprägnieren der Abströmseite des Partikelfilters so vorzunehmen, dass der Grad der Beladung des Filtermaterials mit steigender Eindringtiefe der Beschichtungs- oder Imprägnierlösung abnimmt. Das SCR-aktive Katalysatormaterial, mit dem der Partikelfilter beladen ist, kann als Aktivkomponente Vanadium(IV)oxid und/oder $V_2O_5$ und/oder und/oder $WO_3/TiO_2$ und/oder eisenhaltige Zeolithe und/oder kupferhaltige Zeolithe und/oder kobalthaltige Zeolithe enthalten, wobei zeolithhaltige Katalysatortypen auf Grund ihres hohen $NH_3$- Speichervermögens zu bevorzugen sind.

Um die Abspaltung von Ammoniak aus dem Reduktionsmittel zu begünstigen, ist es weiter von Vorteil, den Partikelfilter zusätzlich auf der Anströmseite mit einem entsprechend aktiven Katalysatormaterial zur Bildung von $NH_3$ zu beschichten oder zu imprägnieren. Als Aktivkomponente für ein solches Katalysatormaterial kommen $TiO_2$ und/oder $TiO_2/SiO_2$ und/oder $TiO_2/SiO_2/Al_2O_3$ und/oder Zirkonoxide und/oder Zeolithe in Frage.

Um zu vermeiden, dass bei der SCR-Reaktion eventuell unverbrauchtes $NH_3$ in die Umwelt gelangt, ist es von Vorteil, den Partikelfilter zusätzlich auf der Abströmseite, in Strömungsrichtung des Abgases gesehen am Ende der Beladung mit SCR-aktivem Katalysatormaterial, mit einem Katalysatormaterial zu beschichten oder zu imprägnieren, das im Abgas vorhandenen überschüssigen Ammoniak oxidiert. Das hierfür geeignete Katalysatormaterial zur Oxidation von überschüssigem Ammoniak kann als Aktivkomponente Elemente der Platingruppe und/ oder deren Oxide und/ oder Zeolithe enthalten.

Eine besonders günstige und damit vorteilhafte Ausführungsform des Partikelfilter sieht vor, dass dieser sowohl

auf seiner Anströmseite als auch auf seiner Abströmseite sacklochartige oder taschenförmige Kammern ausbildet, wobei die auf der Anströmseite gelegenen zur Anströmseite hin und die auf der Abströmseite gelegenen zur Abströmseite hin offen sind.

Nachfolgend wird die Erfindung mit Hilfe der Zeichnungen anhand einiger Beispiele näher erläutert, es zeigen:

Fig. 1 Ein schematische Darstellung eines Abgasnachbehandlungssystems

Fig. 2 Eine Kombination aus Partikelfilter und SCR-Katalysator in schematischer Darstellung

Fig. 3 Eine Kombination aus Partikelfilter und SCR-Katalysator in schematischer Darstellung mit Detailausschnitt

Fig. 4 Tabelle zu einer Gegenüberstellung der Wirkung mit und ohne $NO_2$-Anhebung

Fig. 5 Grafische Darstellung der Gegenüberstellung nach Fig. 4

Ein Abgasnachbehandlungssystem zur selektiven katalytischen Reduktion und zur Reduzierung von Feststoffpartikeln im Abgas einer Brennkraftmaschine ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen in das Abgasnachbehandlungssystem 1, in welchem das heiße Abgas zunächst einen Oxidationskatalysator 4 durchströmt, dessen Aufgabe darin besteht, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren. Stromab zu diesem wird ein Reduktionsmittel möglichst motornah beigegeben. Bei dem Reduktionsmittel handelt es sich, wie bei Kraftfahrzeugen mit SCR-Reaktion in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt) und eine Reduktionsmittelzumesseinrichtung 3, in der Weise, dass über eine Düse 2 die wässrige Harnstofflösung in den Abgasteilstrom eingesprüht wird. Das wie vorstehend beschrieben im Oxidationskatalysator 4 erzeugte Stickstoffdioxid wird einerseits bei der Reduktion der Feststoffpartikel und andererseits bei der nachgeordneten SCR-Reaktion benötigt, wie dies nachfolgend noch näher beschrieben ist.

Stromab zur Reduktionsmitteleindüsung ist ein Partikelfilter 5 angeordnet, der die im Abgas befindlichen Rußpartikel anlagert. Die so im Partikelfilter 5 festgehaltenen Rußpartikel werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für den Partikelfilter 5 entfallen.

Die eigentliche selektive katalytische Reduktion der Stickoxide erfolgt gemäß der in der EP 2014384 A2 beschriebenen Reaktion durch die Rußbeladung und einen SCR-Katalysator 6, der in Figur 1 der Einfachheit halber zwar schematisch als separates Bauteil eingezeichnet ist, aber, wie weiter unten beschrieben, als SCR-aktive Beladung des Partikelfilters 5 ausgeführt ist. In der angesprochenen Reduktionsreaktion soll ein möglichst großer Anteil der im Abgas vorhandenen Stickoxide ($NO_X$), bei gleichzeitiger hoher Selektivität der Reduktion, in Stickstoff und Wasserdampf übergeführt werden, ohne dass überschüssiger Ammoniak ($NH_3$) im Abgasstrom verbleibt. Das in der EP 2014384 A2 beschriebene Verfahren wird ausdrücklich zum Bestandteil dieser Beschreibung gemacht.

Durch die stark exotherme Rußoxidation kann es zu einem deutlichen Temperaturanstieg kommen, so dass stromab des Partikelabscheiders durchaus Temperaturen oberhalb von 650°C, die zu einer Schädigung $V_2O_5$-haltiger SCR-Katalysatoren führen, auftreten können. Aus diesem Grund kann der Einsatz von $V_2O_5$-freien SCR-Katalysatoren, die meist auf Eisen-, Kobalt- oder Kupferzeolithmaterial basieren, sinnvoll sein.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann, wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator ein $NH_3$-Oxidationskatalysator 7 nachgeordnet, mit dem das überschüssige $NH_3$ in Stickstoff und Wasserdampf übergeführt wird. Der $NH_3$-Oxidationskatalysator 7, in Figur 1 ebenfalls schematisch durch ein separates Bauteil eingezeichnet, kann, wie weiter unten gezeigt, ebenfalls Teil der Kombination aus Partikelfilter 5 und SCR-Katalysator sein. Die Oxidationsreaktion zur Beseitigung des überschüssigen Ammoniaks sollte möglichst selektiv ablaufen, so dass zumindest Anteile von Iridium oder Iridiumoxid als Aktivmaterial für den $NH_3$-Oxidationskatalysator 7 verwendet werden sollten.

Wie in Figur 1 weiter mit gestrichelter Umfangslinie eingezeichnet, kann zur Verbesserung der Abspaltung des Ammoniaks aus dem Reduktionsmittel ein Hydrolysekatalysator 8 zum Einsatz kommen, wenn das Temperaturniveau

an der Zuführstelle für das Reduktionsmittel nicht hoch genug ist. Dieser Hydrolysekatalysator 8, im Abgasstrom stromab zur Zuführstelle des Reduktionsmittels und stromauf zum Partikelfilter 5 angeordnet, ist in der Zeichnung zwar ebenfalls schematisch als separates Bauteil eingezeichnet, kann aber, wie weiter unten gezeigt, auch eine Beladung auf der Anströmseite des Partikelfilters 5 mit entsprechend aktivem Katalysatormaterial sein.

Die Ausführung eines Partikelfilters mit SCR-Aktivität zeigt Fig. 2, ebenfalls schematisch, in Schnittdarstellung, wobei die Schnittebene parallel zur Strömungsrichtung des Abgases gewählt ist. Die Strömungsrichtung ist dabei durch Pfeile veranschaulicht.

Der Partikelfilter 9 weist sowohl auf seiner Anströmseite 11 als auch auf seiner Abströmseite 12 sacklochartige oder taschenförmige Kammern 11a, 12a auf, wobei die auf der Anströmseite 11 gelegenen zur Anströmseite 11 hin und die auf der Abströmseite 12 gelegenen zur Abströmseite 12 hin offen sind. Als Filtermaterial für den Partikelfilter 9 können Cordierit oder Siliziumcarbid aber auch Sintermetall oder keramischen Fasern sowie Silikatfasern oder Metallgestricke eingesetzt werden. Der Partikelfilter ist mit SCR- aktivem Material beschichtet oder imprägniert, so dass er, neben der Abscheidung der Rußpartikel als Katalysator zur Reduktion von Stickoxiden dient.

Wie in der Darstellung erkennbar, trifft der mit Rußpartikeln 10 und mit Ammoniak ($NH_3$) (nicht dargestellt) beladene Abgasstrom auf die Anströmseite 11 des Partikelfilters 9 und lagert die Rußpartikel 10 insbesondere in den sacklochartigen oder taschenförmigen Kammern 11a als sogenannten Filterkuchen 13 an, bevor das so von Rußpartikeln 10 gereinigte Abgas durch das Filtermaterial auf die sackloch- oder taschenartigen Kammern 12a der Abströmseite 12 zuströmt. Vor dem Erreichen der Kammern 12a durchströmt das mit $NH_3$ beladene Abgas die in und auf der Filterwand aufgebrachte SCR-Katalysatorschicht (hier nicht dargestellt), bis es aus den sacklochartigen oder taschenförmigen Kammern 12a ausströmt. Auf dem Weg durch die mit SCR-aktivem Katalysatormaterial beladene Schicht, sowie in den Kammern 11a und 12a, findet die selektive katalytische Reduktion nach den Reaktionen (1) und (2) statt, in der die Stickoxide in Stickstoff und Wasserdampf übergeführt werden. Das so von Rußpartikeln und Stickoxiden gereinigte Abgas verlässt auf der Abströmseite 12 die Filteranordnung.

Zur Regenerierung des Partikelfilters 9 muss der Filterkuchen 13 kontinuierlich entfernt werden. Die kontinuierliche Entfernung des Filterkuchens 13 wird, wie bereits zu Figur 1 beschrieben, dadurch bewerkstelligt, dass dem Partikelfilter 9 ein in Figur 2 nicht dargestellter Oxidationskatalysator vorgeschaltet ist, der nach Reaktion (2) zumindest einen Teil des im Abgas vorhandenen Stickstoffmonoxids in Stickstoffdioxid überführt. Der Oxidationskatalysator muss auch stromauf zu der Stelle liegen, an der das Reduktionsmittel dem Abgasstrom beigegeben wird, da sonst das Reduktionsmittel oxidiert und damit für die SCR-Reaktion unbrauchbar würde. Die kontinuierliche Regenerierung des Filterkuchens, gelingt, wie bereits oben beschrieben, durch den periodischen Wechsel zwischen über- und unterstöchiometrischem Feedverhältnis und somit durch ein periodisch hohes Angebot des starken Oxidationsmittels $NO_2$.

Das im Abgas angereicherte Stickstoffdioxid bewirkt im Kontakt mit dem Filterkuchen 13 nach den Reaktionen (4), (5) und (6) eine Umsetzung der Rußpartikel 10 zu CO, $CO_2$, $N_2$ und NO, wobei diese Reaktionen im Rahmen des $NO_2$-Angebotes schwankend aber kontinuierlich ablaufen, so dass der Filterkuchen auf einer im wesentlichen konstanten Dicke und der durch diesen verursachte Abgasgegendruck auf einem im wesentlichen konstanten Niveau gehalten werden kann.

Aus Gründen der thermischen Stabilität der SCR- aktiven Katalysatorschicht kann es vorteilhaft sein, wenn die SCR-aktive Beladung des Partikelfilters in Strömungsrichtung des Abgases ansteigt. Dies lässt sich entweder dadurch erreichen, dass der Partikelfilter in Schichten aufgebaut ist, wobei die Beladung der Schichten mit SCR-aktiven Material in Strömungsrichtung des Abgases zunimmt, oder dadurch, dass die Beladung mit dem SCR-aktiven Material durch Beschichten oder Imprägnieren der Abströmseite des Partikelfilters so vorgenommen wird, dass der Grad der Beladung des Filtermaterials mit steigender Eindringtiefe der Beschichtungs- oder Imprägnierlösung abnimmt.

Um bei instationärem Betrieb der Brennkraftmaschine, wie es bei in Fahrzeugen betriebenen Brennkraftmaschinen der Normalfall ist, einen möglichst hohen Umsatz an Stickoxiden zu Stickstoff und Wasserdampf zu erhalten, ist es notwendig, das Abgasnachbehandlungssystem mit leichten Ammoniaküberschuss zu betreiben. Da das giftige Ammoniak-Gas nicht an die Außenluft abgegeben werden darf, besteht die Notwendigkeit, am Ende der Abgasnachbehandlungsanordnung einen Ammoniak-Oxidationskatalysator 17 als z.B. Beschichtung vorzusehen wie dies in Fig. 2 unten gezeigt ist.

Herstellungsmöglichkeiten für den Grundkörper des Partikelfilters 3 sollen in Verbindung mit Figur 2 ebenfalls beispielhaft und prinzipiell aufgezeigt werden. Um eine sacklochartige Struktur zu erzeugen, kann entweder eine Vielzahl röhrenförmige Gebilde zu einer dichten Packung zusammengefasst werden, wobei jeweils benachbarte Röhren wechselseitig entweder auf der Anströmseite oder auf der Abströmseite verschlossen werden. Das Verschließen kann mit dem gleichen Material erfolgen, das auch für den Partikelfilter 9 verwendet wird, das Material kann aber auch unterschiedlich, z.B. neutral sein. Eine weitere Möglichkeit zur Erzeugung der sacklochartigen Kammern 11a, 12a besteht darin, in einem blockartigen Filterkörper Kanäle vorzusehen, von denen jeweils benachbarte wechselseitig an den jeweils gegenüberliegenden Enden verschlossen sind.

Eine Möglichkeit taschenförmige Strukturen zu erzeugen besteht darin, Packungen von zueinander beabstandeten Platten anzufertigen, wobei die durch die Beabstandung entstandenen benachbarten Freiräume jeweils wechselseitig auf der Anströmseite 11 und der Abströmseite 12 verschlossen sind, so dass sich eine taschenförmige Struktur ausbildet.

Wie bereits in Verbindung mit Figur 1 ausgeführt, kann es zur Verbesserung der Abspaltung von Ammoniak aus dem Reduktionsmittel - z.B. wässrige Harnstofflösung (AdBlue) - notwendig sein, einen die Abspaltung begünstigenden Katalysator einzusetzen, um die Bildung von Cyanursäure nach den Reaktionen (7) und (9) zu verhindern. Die Bildung von Cyanursäure ist deshalb problematisch, weil es dadurch zu einer Verblockung des Partikelfilters und damit nicht nur zum Ausfall des Abgasnachbehandlungssystems, sondern der Brennkraftmaschine kommen kann. Erzeugt wird der Katalysator zur Verbesserung der Abspaltung von Ammoniak aus dem Reduktionsmittel dadurch, dass, wie im unteren Teil von Fig. 2 schematisch gezeigt, die Anströmseite des Partikelfilters 9 mit einem die Abspaltung begünstigenden Katalysatormaterial 16 beladen ist. Dafür in Frage kommende Materialien sind $TiO_2$ oder $TiO_2/SiO_2$ oder $TiO_2/SiO_2/Al_2O_3$, Zirkonoxid sowie Zeolithe.

Zur näheren Erläuterung der mit der vorgeschlagenen Prozessführung erzielten Effekte im Partikelfilter 9 wird im Folgenden auf die Darstellung gemäß Fig. 3 Bezug genommen. Dort ist eine Anordnung ähnlich der in Fig. 2 gezeigt, für gleiche Teile wurden gleich Bezugszeichen verwendet, sodass auf eine nochmalige Beschreibung dieser Teile verzichtet werden kann, es wird auf die entsprechenden Beschreibungsteile zu Figur 2 verwiesen.

Im Laufe der Beladung mit Ruß bildet sich in den Kammern 11a ein Filterkuchen aus, der, übertrieben dargestellt, mit zunehmender Tiefe der Kammern 11a zunimmt. Für die Verdeutlichung der Vorgänge wird auf die Detaildarstellung in der Fig. 3 unten zurückgegriffen. Der Einfachheit halber wird davon ausgegangen, dass der Partikelfilter 9 gleichmäßig mit Katalysatormaterial imprägniert ist. Im Filtermaterial sind Poren 14 ausgebildet, die freie Durchgänge durch das Filtermaterial bilden. Aufgrund der bekannten Effekte der Konfektion und Diffusion und gegebenenfalls der Thermophorese lagern sich in den Kammern 11a und auch in den Wandbereichen der Poren 14 Rußpartikel 10 an. Sind nun aufgrund des Ammoniak-Speichereffektes Ruß und SCR-aktives Material des Partikelfilters 9 mit Ammoniak gesättigt, tritt im Bereich der Ruß-Schicht, der Kanäle 14 und auch in den Kammern 11a ein ausreichendes $NH_3$-Angebot ein, so dass das im Abgasstrom enthaltene Stickstoffdioxid, das am vorgeschalteten Oxidationskatalysator gebildet wurde, mit dem Ammoniak nach Gleichung (3) reagiert. In Folge davon tritt in diesem Bereich eine Verarmung an $NO_2$ ein, sodass für die Oxidation der Rußpartikel nach Gleichungen (4) bis (6) nicht genug $NO_2$ verfügbar ist. In Folge davon wächst die Rußschicht an und führt zu einem erhöhten Abgasgegendruck, der mit einem entsprechenden Leistungsverlust einhergehen würde, wenn der Partikelfilter 9 in Verbindung mit einer Brennkraftmaschine verbaut ist.

Um dem entgegenzuwirken kann man nun das Angebot an Reduktionsmittel vorübergehend absenken, wodurch es zu einer Verarmung an $NH_3$, ausgehend vom Kanaleintritt bzw. von der Rohgasseite zur Reingasseite hin und in dessen Folge zu einer Verschiebung der SCR-Reaktion weg vom Kanaleintritt bzw. in Richtung Reingasseite kommt. Bevor das komplette eingespeicherte $NH_3$ durch die SCR-Reaktion aufgebraucht ist, muss der $NH_3$-Speicher wieder gefüllt werden, andernfalls würde es zu einem starken Anstieg der $NO_x$-Emissionen stromab des Partikelfilters kommen. Das hat allerdings zur Folge, dass nach solchen Phasen der Absenkung überproportional viel Reduktionsmittel eingesetzt werden muss um den Ammoniakspeicher wieder aufzufüllen, sodass die Reduktion der Stickoxide in ausreichendem Umfang erfolgen kann. Da als Reduktionsmittel bei Anwendungen in Kraftfahrzeugen, also in Verbindung mit Verbrennungsmotoren, wässrige Harnstofflösung eingesetzt wird, hat diese überproportionale Anhebung der Reduktionsmittelmenge eine Abkühlung des Abgases und damit des SCR-beladenen Partikelfilters 9 zur Folge. Unter kritischen Betriebsbedingungen, kann dies dazu führen, dass die Umsetzung der wässrigen Harnstofflösung in Ammoniak aufgrund von zu niedrigen Temperaturen nicht vollständig gelingt. Es kann dann zur Bildung von Zwischenprodukten wie z.B. Isocyansäure nach Gleichung (8) kommen, die dann durch Trimerisierung nach der Beziehung (10) zu Cyanursäure umgesetzt wird. Die Cyanursäure lagert sich als Feststoff am Partikelfilter an und verstopft diesen. Da solche Ablagerungen nur schwer wieder aufgelöst werden können, würde dies über einen längeren Zeitraum zum Ausfall der Brennkraftmaschine führen.

Um dieser Problematik entgegenzuwirken, wird alternativ oder in Kombination der Ausstoß der Brennkraftmaschine an Stickoxiden erhöht, eine Maßnahme die dem entgegen läuft, was eigentlich beabsichtigt ist, da die Stickoxide ja der Abgasbestandteil sind, den es zu vermeiden gilt. Erreicht wir dies bei einem Verbrennungsmotor dadurch, dass über Eingriffe in das Motormanagement, das heute mittels elektronischer Motorsteuersysteme bewerkstelligt wird, bestimmte Betriebsparameter verändert werden. Als Betriebsparameter, die unmittelbaren Einfluss auf die $NO_x$-Emissionen haben, kommen z.B. bei luftverdichtenden, selbstzündenden Brennkraftmaschinen unter anderem der Spritzbeginn für die Kraftstoffeinspritzung, das Luft- zu Kraftstoff-Verhältnis (Lambda), der Kraftstoff-Einspritzdruck, die Anzahl der Kraftstoff-Einspritzungen pro Arbeitstakt, die Ansauglufttemperatur und die rückgeführte Abgasmenge (AGR- Rate) bei vorhandener Abgasrückführung in Frage.

So führt beispielsweise eine Verstellung des Spritzbeginns nach früh, eine Absenkung der AGR-Rate, eine Erhöhung des Kraftstoffeinspritzdrucks, des Luft- zu Kraftstoff-Verhältnisses oder der Ansauglufttemperatur, z.B. durch Bypass des Ladeluftkühlers, zu einer Erhöhung der $NO_x$-Rohemission.

Eine Erhöhung des $NO_x$-Ausstoßes bedeutet dabei meist auch eine Anhebung der Verbrennungstemperatur, was dazu führt, dass das Temperaturniveau im Abgas und in Folge davon am SCR-beladenen Partikelfilter 9 ansteigt.

Also der gegenteilige Effekt, den man bei einer zyklischen Absenkung und nachfolgenden überproportionalen Erhöhung der zugesetzten Reduktionsmittelmenge hätte (siehe oben). Dies kommt der Funktionssicherheit des Partikelfilters 9 zugute, weil die Bildung von Cyanursäure sicher vermieden werden kann. Darüber hinaus wird die Umsetzungsrate sowohl an Rußpartikeln als auch an Stickoxiden positiv beeinflusst, weil sich Abgastemperatur und Partikelfilter-/ Katalysatortemperatur in einem optimalen Bereich halten lassen.

Der Effekt der vorstehend beschriebenen Maßnahme lässt sich an einem Versuchsbeispiel aufzeigen. Es wurde dazu eine Dieselmotor vom Typ MAN D2676 unter jeweils gleicher konstanter Last einmal mit und einmal ohne die erfindungsgemäße Prozessführung betrieben, die Reduktionsmittelmenge blieb unverändert. Die Erhöhung des $NO_x$-Ausstoßes erfolgte zyklisch alle 3 Sekunden für jeweils 1 Sekunden, die AdBlue-Dosiermenge und die integrierten $NO_x$-Rohemissionen wurde konstant gehalten. Die Betriebsdauer betrug 28 Stunden. Als Vergleichsgröße wurde der Druckverlust am Partikelfilter nach jeder Betriebsstunde ermittelt. Das Ergebnis der Gegenüberstellung ist in der Tabelle gemäß Fig. 4 aufgezeigt und in der Grafik gemäß Fig. 5 schaubildlich verdeutlicht. Wie im Tabelle und grafischer Darstellung erkennbar, steigt der durch den SCR-beladenen Partikelfilter verursachte Druckverlust gemessen in kPa zunächst von 30 kPa, dem Druckverlust am unbeladenen Filter, ohne periodische $NO_x$-Anhebung in den ersten 3 Betriebsstunden stärker an, bis sich im Filter ein Filterkuchen ausgebildet hat, danach verlangsamt sich der Anstieg des Druckverlustes zwar, wird aber nicht zu Null. Im Falle der periodischen $NO_x$-Anhebung und damit, durch $NH_3$-Verarmung auf der Rohgasseite einhergehende $NO_2$-Anhebung, ergibt sich ein anderes Bild. Hier ist ein verlangsamter Anstieg des Druckverlustes zu erkennen, der nach ca. 6 Betriebsstunden nicht mehr zunimmt. Im Laufe des Versuches mit periodischer $NO_x$-Anhebung kam es, wie durch Messungen stromab zur Katalysatoranordnung ermittelt wurde, zu keinen erhöhten $NO_x$-Anteilen im Abgas.

Die Vergleichsdaten zeigen, dass mit der erfindungsgemäßen Prozessführung ein Anstieg des Druckverlustes am Partikelfilter 9 ohne Veränderung der Reduktionsmittelmenge vermeidbar ist und eine Verstopfung des Partikelfilters 9 sicher unterbunden werden kann. Eine aktive, sauerstoffbasierte Regenerierung des Partikelfilters, mit den damit verbundenen Nachteilen, kann unterbleiben. Da eine starke zyklische Absenkung der Reduktionsmittelmenge mit anschließender überproportionaler Anhebung ebenfalls nicht erfolgt, ist die Gefahr einer Verblockung des Partikelfilters durch unzureichende Reduktionsmittelzersetzung ebenfalls gebannt.

Kerngedanke der vorgeschlagenen Prozessführung ist es, dass das $NH_3$- zu $NO_x$- Verhältnis (Feedverhältnis a) durch Verändern der Harnstoffdosierung und/ oder der Stickoxid-Rohemission phasenweise variiert wird. Durch diese Maßnahme wird, wie in der Detaildarstellung in Fig. 3 angedeutet, in der Ruß-Schicht, sowie zwischen der durch die Linie 15a angedeuteten Katalysatoroberfläche und einer gedachten Linie 15b im Partikelfilter-/ Katalysatormaterialmaterial der eingespeicherte Ammoniak phasenweise aufgezehrt, so dass sich in Folge davon eine $NH_3$-Verarmungszohne 16 im Partikelfilter/ Katalysator und in Folge des lokal geringeren $NO_x$-Umsatzes ein Überangebot von $NO_2$ in den Kanälen 11a sowie den der Katalysatoroberfläche benachbarten Bereichen der Poren 14 einstellt. Dieses $NO_2$ Überangebot führt zu einer verstärkten Oxidation der angelagerten Rußpartikel.

Selbstverständlich kann die vorstehende beispielhaft veranschaulichte Prozessführung variiert werden. So besteht die Möglichkeit, die Wirkung des Verfahrens dadurch zu optimieren, dass die zugeführte Reduktionsmittelmenge nicht entsprechend, insbesondere nicht proportional, der periodisch schwankenden $NO_x$- Rohemission angepasst wird. Auch eine Absenkung der Reduktionsmittelmenge ist dabei denkbar, es muss dabei aber sichergestellt sein, z.B. durch eine Temperaturerfassung vor und/ oder am kombinierten Partikelfilter-SCR-Katalysator, dass ein vorgegebenes Temperaturniveau beim wieder Anheben der Reduktionsmittelmenge nicht unterschritten wird. Insbesondere bietet es sich an, die zugeführte Reduktionsmittelmenge, in den Phasen mit hohen $NO_x$- Rohemissionen, zu verringern oder komplett zu unterbrechen um so die $NH_3$-Verarmung an der rußbeladenen Seite des Partikelfilters zu beschleunigen.

Weiter kann es von Vorteil sein, die Periodenlänge und/oder das Maß der Überhöhung und/oder das Maß der Absenkung und/oder die Dauer der Überhöhung und/oder die Dauer der Absenkung der $NO_x$- Rohemissionen in Abhängigkeit von den Betriebsbedingungen der Abgasnachbehandlungsanlage zu wählen. Als Betriebsbedingungen können dabei die Katalysatortemperatur und/oder der Ammoniakbeladungsgrad des Katalysators und/oder der $NO_x$- Umsatz und/oder die $NO_x$- Rohemission und/oder die $NO_2$-Menge stromauf des Partikelfilters und/oder die $NO_x$- Emission stromab zur Abgasnachbehandlungsanlage und/oder die $NH_3$- Emission stromab zur Abgasnachbehandlungsanlage und/oder die zugeführte Reduktionsmittelmenge und/oder die eingespeicherten $NH_3$-Menge und/oder die einspeicherbare $NH_3$-Menge und/oder dem Beladungsgrad des Partikelfilters mit Ruß berücksichtigt werden. Bestimmen lassen sich solche Betriebsbedingungen über Sensoren und/oder über Modelle, in Form von mathematischen Funktionen, Kennfeldern und/oder neuronalen Netzen. Derartige Techniken sind dem Fachmann bekannt so dass sich eine ausführliche Beschreibung erübrigt.

Sollte den SCR-Katalysator unverbrauchtes $NH_3$ passieren, so kann vorgesehen sein, dieses durch eine auf der Reingasseite des Partikelfilters angeordnete Beladung mit oxidierend wirkendem Material zu zersetzen.

Weiter kann die vorgeschlagene Prozessführung dadurch unterstützt werden, dass die Beladung des Partikelfilters mit SCR-aktivem Material so vorgenommen ist, dass die Ammoniak-Speicherfähigkeit des mit SCR-aktiven Katalysatormaterial beladenen Partikelfilters zur Reingasseite hin ansteigt. Durch diese Maßnahme können die den

Rußablagerungen nahen Bereiche des so mit SCR-aktivem Katalysatormaterial beladenen Partikelfilters durch eine geringere Anhebung der Stickoxid-Rohemission in den Zustand der $NH_3$-Verarmung übergeführt werden.

Abschließend ist ausdrücklich darauf hinzuweisen, dass für die Durchführung des erfindungsgemäßen Verfahrens eine SCR-aktive Beschichtung oder Imprägnierung des Partikelfilters nicht erforderlich ist, weil alleine die Ruß-Schicht bereits den Effekt eins SCR-Katalysators zeigt und das erfindungsgemäße Verfahren auch an einer solchen Anordnung wirksam ist.

## Patentansprüche

1. Verfahren zur Anwendung in Verbindung mit einer Abgasnachbehandlungsanlage (1), die an einer mit Luftüberschuss betriebenen Brennkraftmaschine betrieben wird, und bei der die Abscheidung von Rußpartikeln (10) aus dem Abgas mittels eines Partikelfilters (5; 9) erfolgt und der Partikelfilter mit Hilfe von, an einem stromauf angebrachten NO-Oxidationskatalysator (4) gebildeten $NO_2$ regeneriert wird, und wobei die Reduktion der Stickoxide dadurch erfolgt, dass ein $NH_3$ abspaltendes Reduktionsmittels (3) in den Abgasstrom stromauf des Partikelfilters beigegeben wird und der Partikelfilter mit einem katalytisch aktiven Material zur selektiven katalytischen Reduktion von Stickoxiden (7) beladen ist, **dadurch gekennzeichnet, dass** in Abhängigkeit von einem Beladungsgrad des Partikelfilters (5; 9) mit Ruß das $NH_3$- zu $NO_x$- Verhältnis (a) durch Verändern der $NO_x$-Rohemission und/oder der zugeführten Reduktionsmittelmenge phasenweise variiert wird, derart, dass das $NH_3$- zu $NO_x$- Verhältnis ($\alpha$) phasenweise zwischen Werten größer eins und Werten kleiner eins pendelt, indem nach Phasen mit niedrigem $NH_3$- zu $NO_x$-Verhältnis (a) und bevor das im Partikelfilter gespeicherte $NH_3$ aufgebraucht ist, die zugeführte Reduktionsmittelmenge derart angehoben und/oder die $NO_x$-Rohemission derart abgesenkt wird, dass die zugeführte Reduktionsmittelmenge die $NO_x$-Menge übersteigt.

2. Verfahren nach Anspruch 1, **dadurch gekennzeichnet, dass** als katalytisch aktives Material auf dem Partikelfilter (5; 9) abgeschiedener Ruß (13) und/oder ein auf den Partikelfilter (16) aufgebrachter SCR-Katalysator eingesetzt wird.

3. Verfahren nach Anspruch 1 oder 2, **dadurch gekennzeichnet, dass** als katalytisch aktives Material auf dem Partikelfilter (5; 9) abgeschiedener Ruß (13) und/oder ein auf den Partikelfilter aufgebrachter SCR-Katalysator (16), nämlich ein vanadiumoxidhaltiger und/oder zeolithhaltiger SCR-Katalysator, eingesetzt wird.

4. Verfahren nach einem der Ansprüche 1 bis 3, **dadurch gekennzeichnet, dass** die zugeführte Reduktionsmittelmenge nicht entsprechend der periodisch variierten $NO_x$-Rohemission angepasst wird.

5. Verfahren nach einem der Ansprüche 1 bis 4, **dadurch gekennzeichnet, dass** die zugeführte Reduktionsmittelmenge nicht proportional der periodisch variierten $NO_x$-Rohemission angepasst wird.

6. Verfahren nach einem der Ansprüche 1 bis 5, **dadurch gekennzeichnet, dass** die zugeführte Reduktionsmittelmenge phasenweise verringert oder komplett unterbrochen wird.

7. Verfahren nach einem der Ansprüche 1 bis 6, **dadurch gekennzeichnet, dass** die zugeführte Reduktionsmittelmenge in den Phasen mit hohen $NO_x$-Rohemissionen phasenweise verringert oder komplett unterbrochen wird.

8. Verfahren nach einem der Ansprüche 1 bis 7, **dadurch gekennzeichnet, dass** die $NO_x$-Rohemissionen durch Ändern des Kraftstoff-Einspritzbeginns und/oder des Luft- zu Kraftstoffverhältnisses und/oder des Kraftstoff-Einspritzdrucks und/oder der Anzahl und zeitliche Abfolge der Kraftstoff-Einzeleinspritzungen während eines Arbeitstaktes und/oder der rückgeführten Abgasmenge und/oder der Ansauglufttemperatur angehoben wird.

9. Verfahren nach einem der Ansprüche 1 bis 8, **dadurch gekennzeichnet, dass** die Periodenlänge und/oder das Maß der Überhöhung und/oder das Maß der Absenkung und/oder die Dauer der Überhöhung und/oder die Dauer der Absenkung der $NO_x$-Rohemissionen in Abhängigkeit von den Betriebsbedingungen der Abgasnachbehandlungsanlage (1) gewählt wird.

10. Verfahren nach Anspruch 9, **dadurch gekennzeichnet, dass** als Betriebsbedingungen die Katalysatortemperatur und/oder der Ammoniakbeladungsgrad des Katalysators und/oder der $NO_x$- Umsatz und/oder die $NO_x$-Rohemission und/oder die $NO_2$-Menge stromauf des Partikelfilters (5; 9) und/oder die $NO_x$- Emission stromab zur Abgasnachbehandlungsanlage und/oder die $NH_3$- Emission stromab zur Abgasnachbehandlungsanlage und/oder die zugeführte Reduktionsmittelmenge und/oder die eingespeicherten $NH_3$-Menge und/oder der einspeicherbare $NH_3$-Menge und/oder dem Beladungsgrad des Partikelfilters (5; 9) mit Ruß berücksichtigt werden.

11. Verfahren nach einem der Ansprüche 9 oder 10, **dadurch gekennzeichnet, dass** die Betriebsbedingungen der Abgasnachbehandlungsanlage über Sensoren und/oder über Modelle, in Form von mathematischen Funktionen, Kennfeldern und/oder neuronalen Netzen, bestimmt werden.

12. Verfahren nach einem der vorstehend genannten Ansprüche, **dadurch gekennzeichnet, dass** das SCR-aktive Material passierende unverbrauchte $NH_3$ durch eine auf der Reingasseite des Partikelfilters (5; 9) angeordnete Beladung (7) mit oxidativ wirkenden Material zersetzt wird.

13. Verfahren nach einem der vorstehend genannten Ansprüche, **dadurch gekennzeichnet, dass** die $NO_x$-Rohemission und/oder das $NH_3$- zu $NO_x$- Verhältnis ($\alpha$) um wenigstens 20%, bevorzugt um wenigstens 40%, höchst bevorzugt um wenigstens 60% variiert werden.

14. Anordnung zur Durchführung des Verfahrens nach einem der Ansprüche 1 bis 13 **dadurch gekennzeichnet, dass** die Beladung des Partikelfilters (5; 9) mit SCR-aktivem Material (13; 16) von der Rohgasseite zur Reingasseite hin ansteigt.

15. Anordnung zur Durchführung des Verfahrens nach einem der Ansprüche 1 bis 13 **dadurch gekennzeichnet, dass** die Beladung des Partikelfilters (5; 9) mit SCR-aktivem Material (13; 16) so vorgenommen ist, dass die Ammoniak-Speicherfähigkeit des mit SCR-aktiven Katalysatormaterial beladenen Partikelfilters (5; 9) zur Reingasseite hin ansteigt.

## Claims

1. Method for use in conjunction with an exhaust-gas aftertreatment system (1) which is operated on an internal combustion engine operated with an excess of air, in which exhaust-gas aftertreatment system soot particles (10) are separated out of the exhaust gas by means of a particle filter (5; 9) and the particle filter is regenerated with the aid of $NO_2$ formed on an NO oxidation catalytic converter mounted upstream, and wherein the reduction of the nitrogen oxides is realized by virtue of a reducing agent (3) which splits to form $NH_3$ being metered into the exhaust-gas flow upstream of the particle filter and the particle filter being laden with a catalytically active material for the selective catalytic reduction of nitrogen oxides (7), **characterized in that**, depending on a degree of soot loading of the particle filter (5; 9), the $NH_3$ to $NO_x$ ratio (a) is varied in phases by changing the $NO_x$ untreated emissions and/or the supplied amount of reducing agent, in such a way that the $NH_3$ to $NO_x$ ratio (a) alternates in phases between values of greater than one and values of less than one, by virtue of the fact that, after phases with low $NH_3$ to $NO_x$ ratio (a) and before the $NH_3$ stored in the particle filter is used up, the supplied amount of reducing agent is raised in such a way and/or the $NO_x$ untreated emissions are lowered in such a way that the supplied amount of reducing agent exceeds the $NO_x$ amount.

2. Method according to Claim 1, **characterized in that** soot (13) deposited on the particle filter (5; 9) and/or an SCR catalyst applied to the particle filter (16) are/is used as catalytically active material.

3. Method according to Claim 1 or 2, **characterized in that** soot (13) deposited on the particle filter (5; 9) and/or an SCR catalyst (16) applied to the particle filter, namely on SRC catalyst containing vanadium oxide and/or containing zeolite, are/is used as catalytically active material.

4. Method according to one of Claims 1 or 3, **characterized in that** the supplied amount of reducing agent is not adapted correspondingly to the periodically varied $NO_x$ untreated emissions.

5. Method according to one of Claims 1 to 4, **characterized in that** the supplied amount of reducing agent is not adapted proportionally to the periodically varied $NO_x$ untreated emissions.

6. Method according to one of Claims 1 to 5, **characterized in that** the supplied amount of reducing agent is reduced in phases or the supply of reducing agent is suspended entirely.

7. Method according to one of Claims 1 to 6, **characterized in that**, in the phases with high $NO_x$ untreated emissions,

the supplied amount of reducing agent is reduced in phases or the supply of reducing agent is suspended entirely.

**8.** Method according to one of Claims 1 to 7, **characterized in that** the $NO_x$ untreated emissions are raised by changing the start of injection of the fuel and/or the air to fuel ratio and/or the fuel injection pressure and/or the number and chronological sequence of the individual fuel injections during a working stroke and/or the recirculated amount of exhaust gas and/or the intake air temperature.

**9.** Method according to one of Claims 1 to 8, **characterized in that** the period length and/or the magnitude of the increase and/or the magnitude of the reduction and/or the duration of the increase and/or the duration of the reduction of the $NO_x$ untreated emissions are/is selected as a function of the operating conditions of the exhaust-gas aftertreatment system (1).

**10.** Method according to Claim 9, **characterized in that** the catalytic converter temperature and/or the degree of ammonia loading of the catalytic converter and/or the $NO_x$ conversion and/or the $NO_x$ untreated emissions and/or the amount of $NO_2$ upstream of the particle filter (5; 9) and/or the $NO_x$ emissions downstream of the exhaust-gas aftertreatment system and/or the $NH_3$ emissions downstream of the exhaust-gas aftertreatment system and/or the supplied amount of reducing agent and/or the stored amount of $NH_3$ and/or the storable amount of $NH_3$ and/or the degree of loading of the particle filter (5; 9) with soot are/is taken into consideration as operating conditions.

**11.** Method according to either of Claims 9 and 10, **characterized in that** the operating conditions of the exhaust-gas aftertreatment system are determined by means of sensors and/or by means of models in the form of mathematical functions, characteristic maps and/or neural networks.

**12.** Method according to one of the preceding claims, **characterized in that** the unconsumed $NH_3$ that passes the SCR-active material is broken down by a material loading (7) with an oxidative action arranged on the clean-gas side of the particle filter (5; 9).

**13.** Method according to one of the preceding claims, **characterized in that** the $NO_x$ untreated emissions and/or the $NH_3$ to $NO_x$ ratio (a) are varied by at least 20%, preferably by at least 40%, most preferably by at least 60%.

**14.** Arrangement for carrying out the method according to one of Claims 1 to 13, **characterized in that** the loading of the particle filter (5; 9) with SCR-active material (13; 16) increases from the untreated-gas side towards the clean-gas side.

**15.** Arrangement for carrying out the method according to one of Claims 1 to 13, **characterized in that** the loading of the particle filter (5; 9) with SCR-active material (13; 16) is realized such that the ammonia storage capability of the particle filter (5; 9) laden with SCR-active catalyst material increases towards the clean-gas side.

## Revendications

**1.** Procédé destiné à être utilisé en association avec un système de post-traitement des gaz d'échappement (1) qui est mis en fonctionnement au niveau d'un moteur à combustion interne fonctionnant avec de l'air en excès, et avec lequel on obtient le dépôt de particules de noir de carbone (10) issues des gaz d'échappement au moyen d'un filtre à particules (5 ; 9) et le filtre à particules est régénéré à l'aide de gaz $NO_2$ qui se forme en amont du catalyseur d'oxydation de NO (4) et avec lequel la réduction des oxydes d'azote a lieu en ajoutant un agent réducteur séparant du NH3 (3) dans le flux de gaz d'échappement en amont du filtre à particules et le filtre à particules est chargé avec un matériau catalytiquement actif pour réaliser la réduction catalytique sélective des oxydes d'azote (7), **caractérisé en ce qu'**en fonction d'un degré de charge du filtre à particules (5 ; 9) avec du noir de carbone, on fait varier par phases le rapport entre NH3 et $NO_x$ ($\alpha$) en changeant l'émission brute de $NO_x$ et/ou la quantité d'agent réducteur fournie, de sorte que le rapport entre NH3 et $NO_x$ ($\alpha$) oscille par phases entre des valeurs supérieures à 1 et des valeurs inférieures à 1, **en ce qu'**après les phases avec un faible rapport entre NH3 et $NO_x$ ($\alpha$) et avant l'apport du NH3 stocké dans le filtre à particules, la quantité d'agent réducteur fournie est augmentée et/ou l'émission brute de $NO_x$ sont réduites, de telle sorte que la quantité d'agent réducteur fournie dépasse la quantité de $NO_x$.

**2.** Procédé selon la revendication 1, **caractérisé en ce que** du noir de carbone (13) déposé sur le filtre à particules (5 ; 9) et/ou un catalyseur SCR appliqué sur le filtre à particules (16) est utilisé en tant que matériau catalytiquement actif.

3. Procédé selon la revendication 1 ou 2, **caractérisé en ce que** du noir de carbone (13) déposé sur le filtre à particules (5 ; 9) et/ou un catalyseur SCR appliqué sur le filtre à particules (16), à savoir un catalyseur SCR contenant de l'oxyde de vanadium et/ou une zéolite est utilisé en tant que matériau catalytiquement actif.

4. Procédé selon une des revendications 1 à 3, **caractérisé en ce que** la quantité d'agent réducteur fournie n'est pas ajustée en fonction des émissions brutes de $NO_x$ variées périodiquement.

5. Procédé selon une des revendications 1 à 4, **caractérisé en ce que** la quantité d'agent réducteur fournie n'est pas proportionnelle aux émissions brutes de $NO_x$ variées périodiquement.

6. Procédé selon une des revendications 1 à 5, **caractérisé en ce que** la quantité d'agent réducteur fournie par phases est réduite ou complètement interrompue.

7. Procédé selon une des revendications 1 à 6, **caractérisé en ce que** la quantité d'agent réducteur fournie au cours des phases à haute teneur en émissions brutes de $NO_x$ est réduite ou complètement interrompue par phases.

8. Procédé selon une des revendications 1 à 7, **caractérisé en ce que** les émissions brutes de NOx sont augmentées à cause de la modification du début de l'injection de carburant et/ou du rapport air/carburant et/ou de la pression d'injection de carburant et/ou du nombre et du déroulement chronologique des injections individuelles de carburant pendant un cycle de travail et/ou de la quantité des gaz d'échappement recyclés et/ou de la température de l'air d'admission.

9. Procédé selon une des revendications 1 à 8, **caractérisé en ce que** l'on sélectionne la longueur de période et/ou l'étendue du dépassement et/ou le degré de réduction et/ou la durée du dépassement et/ou la durée de la réduction des émissions brutes de NOx en fonction des conditions de fonctionnement du système de post-traitement des gaz d'échappement (1).

10. Procédé selon la revendication 9, **caractérisé en ce que** les conditions de fonctionnement prises en compte sont la température du catalyseur et/ou le degré de charge d'ammoniac du catalyseur et/ou la conversion des NOx et/ou les émissions brutes de $NO_x$ et/ou la quantité de NO2 en amont du filtre à particules (5 ; 9) et/ou les émissions de $NO_x$ en aval du système de post-traitement des gaz d'échappement et/ou l'émission de NH3 en aval du système de post-traitement des gaz d'échappement et/ou la quantité d'agent réducteur fournie et/ou la quantité de NH3 stockée et/ou la quantité de NH3 stockable et/ou le degré de charge du filtre à particules (5 ; 9) en noir de carbone.

11. Procédé selon l'une des revendications 9 ou 10, **caractérisé en ce que** les conditions de fonctionnement du système de post-traitement des gaz d'échappement sont déterminées à l'aide de capteurs et/ou de modèles, sous la forme de fonctions mathématiques, de champs de données et/ou de réseaux neuronaux.

12. Procédé selon l'une des revendications précédemment citées, **caractérisé en ce que** le NH3 non utilisé traversant le matériau actif SCR est décomposé par une charge (7) avec un matériau agissant par oxydation disposée du côté des gaz propres du filtre à particules (5 ; 9).

13. Procédé selon l'une des revendications précédemment citées, **caractérisé en ce que** les émissions brutes de $NO_x$ et/ou le rapport entre NH3 et $NO_x$ ($\alpha$) peut être modifié d'au moins 20%, de préférence d'au moins 40%, le plus préférablement d'au moins 60%.

14. Arrangement pour la mise en oeuvre du procédé selon l'une des revendications 1 à 13, **caractérisé en ce que** la charge du filtre à particules (5; 9) en matériau actif SCR (13; 16) augmente du côté des gaz bruts vers le côté des gaz propres.

15. Arrangement pour la mise en oeuvre du procédé selon l'une des revendications 1 à 13, **caractérisé en ce que** la charge du filtre à particules (5 ; 9) avec le matériau actif SCR (13 ; 16) est telle que la capacité de stockage d'ammoniac du filtre à particules (5 ; 9) chargé de matériau catalyseur actif SCR augmente du côté des gaz propres.

Fig. 1

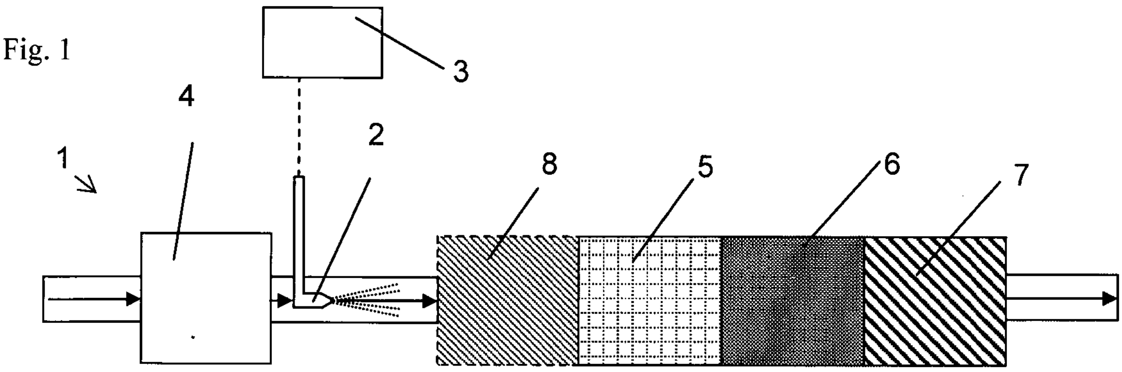


Fig. 2

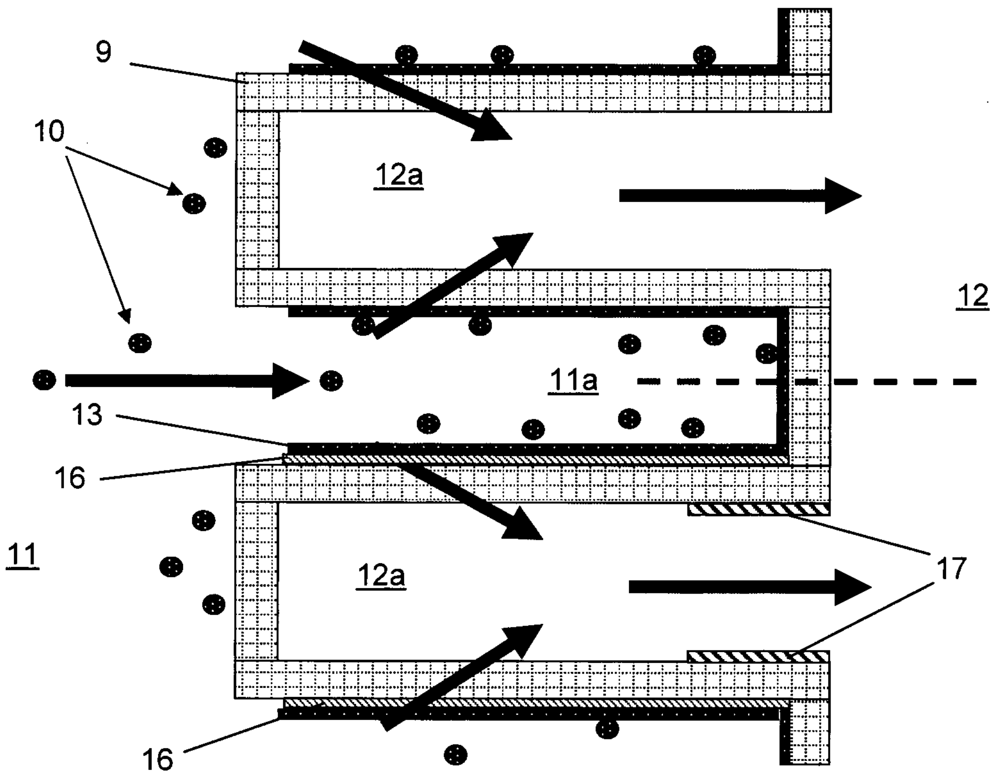

Fig. 3

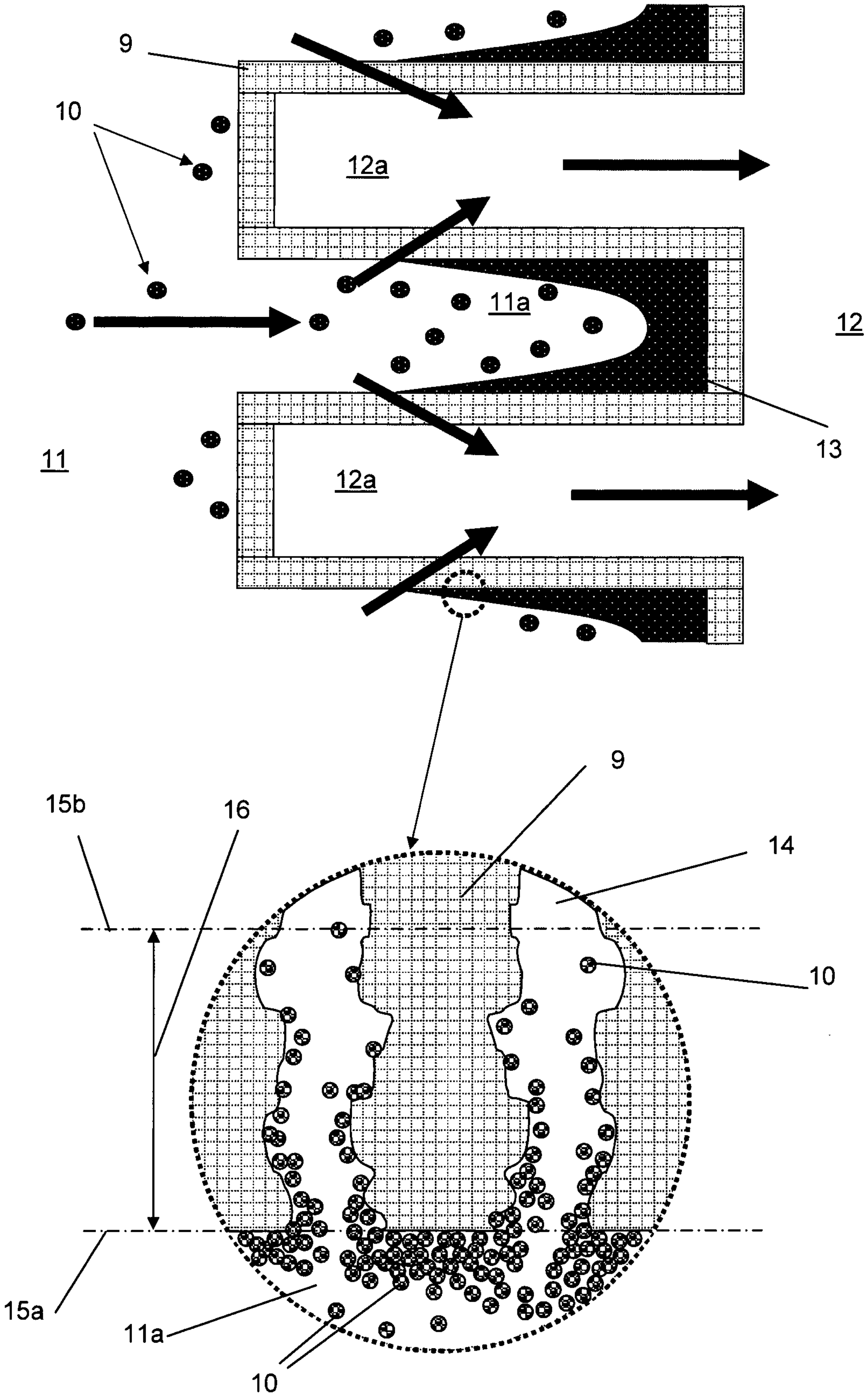

| | | |
|---|---|---|
| Zeit [h] | Druckverlust ohne periodische NOx-Anhebung [kPa] | Druckverlust mit periodischer NOx-Anhebung [kPa] |
| 0 | 30 | 30 |
| 0,5 | 35 | 32 |
| 1 | 40 | 34 |
| 1,5 | 44 | 37 |
| 2 | 47 | 39 |
| 3 | 50 | 43 |
| 4 | 50,5 | 45,5 |
| 5 | 51 | 47 |
| 6 | 51,5 | 49,3 |
| 7 | 52 | 50 |
| 8 | 52,5 | 50,5 |
| 9 | 53 | 50,8 |
| 10 | 53,5 | 50,3 |
| 11 | 54 | 50,5 |
| 12 | 54,5 | 50,4 |
| 13 | 55 | 50,3 |
| 14 | 55,5 | 50,5 |
| 15 | 56 | 50,7 |
| 16 | 56,5 | 50,3 |
| 17 | 57 | 50,5 |
| 18 | 57,5 | 50,4 |
| 19 | 58 | 50,3 |
| 20 | 58,5 | 50,5 |
| 21 | 59 | 50,5 |
| 22 | 59,5 | 50,4 |
| 23 | 60 | 50,5 |
| 24 | 60,5 | 50,4 |
| 25 | 61 | 50,3 |
| 26 | 61,5 | 50,5 |
| 27 | 62 | 50,7 |
| 28 | 62,5 | 50,3 |

Fig. 4

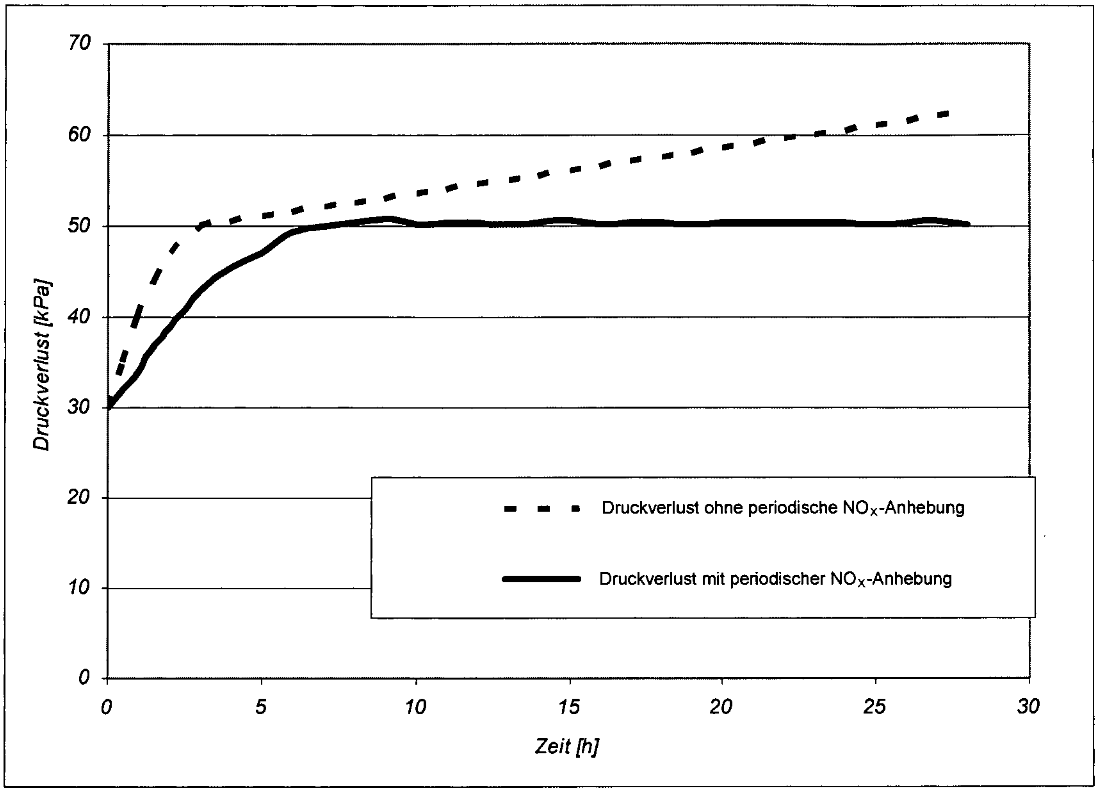

70
60
50
40
30
20
10
0
Druckverlust [kPa]
0
5
10
15
20
25
30
Zeit [h]
Druckverlust ohne periodische NOx-Anhebung
Druckverlust mit periodischer NOx-Anhebung


Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3428232 A1
- EP 0341832 A2
- DE 10348799 A1
- EP 1054722 A1
- DE 4038054 A1
- DE 4038054
- DE 10323607
- EP 2014348 A
- EP 2166203 A1
- US 20120017567 A1
- US 20100057328 A1
- DE 102006021089 A1
- WO 2010140262 A1
- US 20110047970 A1
- EP 2014384 A2